# EUROPÄISCHE PATENTANMELDUNG

(11) **EP 2 248 657 A2**
(43) Veröffentlichungstag der Anmeldung: **10.11.2010**
(21) Anmeldenummer: 10002029.6
(22) Anmeldetag: 26.02.2010
(51) Int. Cl.: B29C 65/18, B29C 65/60

(54) **Vorrichtung zum Verbinden von Gegenständen über wenigstens ein durch Wärme plastifizierbares Verbindungselement**

(30) Priorität: 06.05.2009 DE 102009020173
(71) Anmelder: Maschinenfabrik Spaichingen GmbH, 78549 Spaichingen (DE)
(72) Erfinder: Balle, Clemens, 72458 Albstadt (DE); Baumeister, Thomas, 78554 Aldingen (DE); Beck, Armin, 78588 Denkingen (DE); Jundt, Hartmut, 78628 Rottweil (DE); Prirsch, Bernd, 78667 Villingendorf (DE); Wein, Joachim, 78652 Deißlingen (DE)
(74) Vertreter: Manitz, Finsterwald & Partner GbR

(57) **Zusammenfassung**

Eine Vorrichtung zum Verbinden von Gegenständen über wenigstens ein durch Wärme plastifizierbares Verbindungselement umfasst eine zum Verbindungselement hin und von diesem wegbewegbare, einen Schaft (10) aufweisende, insbesondere beheizbare Kalotte (12) zur Ausbildung eines Nietkopfes am Verbindungselement und Mittel zum Kühlen der Kalotte mittels eines Kühlfluids, insbesondere Luft. Eine erste Variante zeichnet sich dadurch aus, dass der Schaft der Kalotte einen vorzugsweise bis in den Kalottenkörper (14) reichenden zentralen Kühlfluidzufuhrkanal (16) besitzt und innerhalb des Kalottenkörpers mehrere ausgehend vom zentralen Kühlfluidzufuhrkanal jeweils zumindest allgemein radial nach außen geführte Kühlfluidkanäle (18,18',18'') vorgesehen sind. Alternativ kann vorgesehen sein, dass die Kalotte zumindest teilweise aus porösem, luftdurchlässigem Material, insbesondere Keramikmaterial, hergestellt ist und der Schaft der Kalotte mit einer vorzugsweise bis in den Kalottenkörper reichenden zentralen Kühlfluidzufuhrbohrung versehen ist. Es können insbesondere auch Mittel zum direkten Beheizen der Kalotte vorgesehen sein, wobei diese vorteilhafterweise wenigstens ein Keramikheizelement umfassen.

## Beschreibung

Die Erfindung betrifft eine Vorrichtung zum Verbinden von Gegenständen über wenigstens ein durch Wärme plastifizierbares Verbindungselement, mit einer zum Verbindungselement hin und von diesem wegbewegbaren, einen Schaft aufweisenden, insbesondere beheizbaren Kalotte zur Ausbildung eines Nietkopfes am Verbindungselement und Mitteln zum Kühlen der Kalotte mittels eines Kühlfluids, insbesondere Luft.

Vorrichtungen dieser Art arbeiten nach dem so genannten Nietdom-Schweißprinzip, wonach zunächst ein an einem der Gegenstände angebrachtes Verbindungselement mit einem an ihm ausgebildeten Vorsprung, dem so genannten Nietdom, durch eine Öffnung des anderen Gegenstandes gesteckt und dann am freien Ende des Nietdoms mit einem angeformten Nietkopf versehen wird. Hierbei kann das Verbindungselement auch aus einem separaten Bauteil bestehen, das durch beide Gegenstände gesteckt wird und an einem Ende einen bereits zuvor angebrachten Kopf aufweist.

Die Anformung des Nietkopfes erfolgt bei Anwendung des beschriebenen Schweißprinzips dadurch, dass der Nietdom durch Erwärmung plastifiziert und mittels eines nachfolgend als Kalotte bezeichneten und gegen den Nietdom gedrückten Werkzeugs in die im Einzelfall erwünschte Form gebracht wird. Dabei besteht meistens wenigstens einer der beiden Fügepartner aus einem plastifizierbaren Kunststoff, obwohl es prinzipiell aber auch ausreicht, wenn allein die beteiligten Verbindungselemente oder die an diesen vorgesehenen Nietdome aus einem plastifizierbaren Material bestehen.

Eine Vorrichtung der eingangs genannten Art ist in der DE 10 2004 057 453 B3 beschrieben. Dabei wird die Kalotte an eine Wärmequelle angekoppelt und aufgeheizt. Sobald die Kalotte eine Temperatur erreicht hat, die über der Erweichungstemperatur des zu bearbeitenden Werkstoffs liegt, wird sie auf das Werkstück abgesenkt und formt einen Nietdom zu einem Nietkopf um. Anschließend wird die Nietkalotte von der Wärmequelle abgekoppelt und durch Anblasen mit Luft abgekühlt. Damit wird dem Umstand Rechnung getragen, dass eine erhitzte Kalotte nicht sofort nach der Ausformung eines jeweiligen Nietkopfes von diesem abgezogen werden kann, sondern abgewartet werden muss, bis die Kalotte auf eine deutlich unterhalb der Schmelztemperatur des Nietdom-Materials liegende Temperatur abgekühlt ist. Andernfalls würde die Gefahr bestehen, dass die Nietköpfe reißen oder die Kalotte Fäden zieht.

Das Abkühlen der Kalotte erfolgt üblicherweise durch seitliches Anblasen mit Luft. Die an der Kalotte vorbeistreichende Luft kann aber nur wenig Wärme aufnehmen, was den Nachteil mit sich bringt, dass entweder lange angeblasen oder ein hoher Luftvolumenstrom verwendet werden muss. In beiden Fällen ergibt sich ein relativ hoher Luftverbrauch.

Aus der DE 100 38 158 A1 ist eine Vorrichtung mit einem zur Ausbildung eines jeweiligen Nietkopfes beheizbaren Formstempel beschrieben, der von einer Strömungsbegrenzungswand umgeben ist. Zur anschließenden Abkühlung des zuvor beheizten Formstempels wird Kühlluft in den zwischen dem heizbaren Formstempel und der Strömungsbegrenzungswand gebildeten Spalt eingebracht. Damit wird zwar die Abkühlzeit etwas verkürzt bzw. eine Verringerung des Kühlluftverbrauchs ermöglicht, mit der Strömungsbegrenzungswand, den betreffenden Befestigungsteilen usw. ergibt sich jedoch ein Mehraufwand an Bauteilen. Überdies ist in dieser DE 100 38 158 A1 eine Vorrichtung mit einem nicht beheizbaren Formstempel beschrieben, bei der das plastifizierbare Verbindungselement über einen Strahlungsheizkörper erwärmt wird und der Formstempel mit einem am freien Ende ausmündenden Gaszufuhrkanal versehen ist, über den unmittelbar vor dem Verformungsvorgang das Verbindungselement mit einer Gasströmung beaufschlagt wird, die durch die Strahlungsheizung erhitzt wird, um eine homogenere Erwärmung des Verbindungselements zu erreichen. Während des Verformungsvorgangs kann bei durch das Verbindungselement verschlossenem Ende des Zuführungskanals die Gasmenge erhöht werden, wobei das Gas dann über eine ausgehend vom Zuführungskanal in deutlichem Abstand von der Kontaktfläche mit dem Verbindungselement von dieser weg allgemein schräg nach oben geführte Abzweigleitung entweicht, wodurch eine gewisse Abkühlung des Formstempels und damit des angeformten Nietkopfes erreicht wird. Insbesondere im Fall einer beheizbaren Kalotte, d.h. einer Beheizung des Verbindungselements primär über die mit diesem in Kontakt kommende Kalotte, würde sich jedoch nach wie vor eine relativ lange Abkühlzeit bzw. ein relativ hoher Luftverbrauch ergeben.

Der Erfindung liegt die Aufgabe zugrunde, eine verbesserte Vorrichtung der eingangs genannten Art zu schaffen, bei der die zuvor erwähnten Nachteile beseitigt sind. Dabei soll bei minimalem apparativen Aufwand insbesondere der Kühlfluidverbrauch weiter reduziert bzw. die Abkühlzeit weiter verkürzt werden.

Gemäß einer ersten Alternative der Erfindung wird diese Aufgabe dadurch gelöst, dass der Schaft der Kalotte einen vorzugsweise bis in den Kalottenkörper reichenden zentralen Kühlfluidzufuhrkanal besitzt und innerhalb des Kalottenkörpers mehrere ausgehend vom zentralen Kühlfluidzufuhrkanal jeweils zumindest allgemein radial nach außen geführte Kühlfluidkanäle vorgesehen sind.

Indem der Kalottenkörper durch eine Mehrzahl von Kühlfluidkanälen von innen gekühlt wird, ergibt sich insgesamt ein geringerer Kühlfluidverbrauch bzw. eine kürzere Abkühlzeit, was insbesondere dann von Vorteil ist, wenn eine beheizbare Kalotte vorgesehen ist bzw. das Verbindungselement primär über die mit diesem in Kontakt tretende Kalotte erwärmt wird. Zudem wird die Geräuschentwicklung beim Kühlen durch die erfindungsgemäße Vorrichtung deutlich reduziert.

Um eine möglichst gute Kühlwirkung zu erzielen, sind die innerhalb des Kalottenkörpers vorgesehenen Kühlfluidkanäle möglichst nahe an der Kontaktfläche des Kalottenkörpers zum Verbindungselement angeordnet.

Im einfachsten Fall können lediglich zwei Kühlfluidkanäle im Kalottenkörper vorgesehen sein. Zweckmäßigerweise können jedoch auch mehr als zwei, insbesondere mehr als vier und vorzugsweise mehr als sechs solche Kühlfluidkanäle im Kalottenkörper vorgesehen sein.

Gemäß einer bevorzugten praktischen Ausführungsform der erfindungsgemäßen Vorrichtung sind innerhalb des Kalottenkörpers zwei bis zehn jeweils zumindest allgemein radial nach außen geführte Kühlfluidkanäle vorgesehen.

Die zumindest allgemein radial nach außen geführten Kühlfluidkanäle können in Umfangsrichtung insbesondere gleichmäßig verteilt, d.h. so angeordnet sein, dass die Winkelabstände zwischen den jeweils benachbarten Kühlfluidkanälen zumindest im Wesentlichen gleich groß sind.

In bestimmten Fällen kann es jedoch auch von Vorteil sein, wenn die zumindest allgemein radial nach außen geführten Kühlfluidkanäle in Umfangsrichtung ungleichmäßig verteilt sind, d.h. die Winkelabstände zwischen den jeweils benachbarten Kühlfluidkanälen zumindest teilweise verschieden sind.

Dabei kann die Kühlfluidkanaldichte vorteilhafterweise in einem definierten Bereich, insbesondere einem Bereich relativ größerer Massenanhäufung des Kalottenkörpers, höher als im restlichen Kalottenkörper sein. Dies ist beispielsweise dann von Vorteil, wenn bedingt durch die Nietkopfform der Kalottenkörper eine dem Verbindungselement zugewandte Kontaktfläche aufweist, die bezüglich des sich in Axialrichtung erstreckenden Kalottenschaftes nicht mehr orthogonal sondern geneigt ist. Im Bereich der sich dadurch ergebenden Massenanhäufung kann dann eine höhere Kühlfluidkanaldichte vorgesehen sein, um die Kühlwirkung in diesem Bereich zu erhöhen.

Von Vorteil ist insbesondere, wenn die Winkelabstände zwischen den jeweils benachbarten Kühlfluidkanälen in dem Bereich höherer Kühlfluidkanaldichte kleiner sind als im restlichen Kalottenkörper.

Insbesondere in dem Fall, dass bedingt durch die Nietkopfform die Kontaktfläche des Kalottenkörpers zum sich in Axialrichtung erstreckenden Schaft nicht mehr orthogonal, sondern relativ zu diesem geneigt ist, kann es auch von Vorteil sein, wenn die Kühlfluidkanäle zumindest teilweise mit der Achse des Kalottenschafts jeweils einen Winkel ungleich 90° bilden. Dabei sind die Kühlfluidkanäle bevorzugt wieder möglichst nahe an der mit dem zu bildenden Nietkopf in Kontakt bringbaren Nietkontaktfläche des Kalottenkörpers angeordnet, um eine möglichst gute Kühlwirkung zu erzielen.

Gemäß einer bevorzugten Ausführungsform der erfindungsgemäßen Vorrichtung besitzen die Kühlfluidkanäle zumindest teilweise ausgehend vom zentralen Kühlfluidzufuhrkanal zunächst eine relativ kleinere Innenquerschnittsfläche und anschließend eine relativ größere Innenquerschnittsfläche, wodurch die Kühlwirkung weiter erhöht wird. So tritt im Bereich des Übergangs von einem jeweiligen geringeren zu einem relativ größeren Innenquerschnitt eine Expansion des Kühlfluids auf, was mit einer zusätzlichen Abkühlung einhergeht. Es wird hier also der so genannte Joule-Thomson-Effekt ausgenutzt.

Dieser Joule-Thomson-Effekt wird auch bei einer weiteren vorteilhaften Ausführungsform genutzt, gemäß der im Bereich des den Kühlfluidkanälen benachbarten Endes des zentralen Kühlfluidzufuhrkanals eine in die Kühlfluidkanäle mündende Engstelle vorgesehen ist, um im Anschluss daran eine Entspannung des Kühlmediums zu bewirken.

Von besonderem Vorteil ist hierbei, wenn in das den Kühlfluidkanälen benachbarte Ende des zentralen Kühlfluidzufuhrkanals ein austauschbarer, die Engstelle aufweisender Einsatz einbringbar ist. Dabei kann das den Kühlfluidkanälen benachbarte Ende des zentralen Kühlfluidzufuhrkanals vorteilhafterweise mit einem Innengewinde versehen sein, in das der mit einem Außengewinde versehene austauschbare Einsatz einschraubbar ist.

Der Einsatz besitzt zweckmäßigerweise einen Abschnitt mit einer relativ größeren Innenquerschnittsfläche, an den sich ein Endabschnitt mit der im Vergleich dazu eine relativ kleinere Innenquerschnittsfläche besitzenden Engstelle anschließt.

Gemäß einer bevorzugten praktischen Ausführungsform ist der Einsatz aus einer Mehrzahl von Einsätzen mit Engstellen unterschiedlicher Innenquerschnittsfläche auswählbar. Durch die Bereitstellung einer Mehrzahl von Einsätzen mit unterschiedlich dimensionierten Engstellen und eine entsprechende Auswahl eines betreffenden Einsatzes kann der Kühleffekt auf einfachste Weise optimal an unterschiedliche Kalottengeometrien angepasst werden.

Bevorzugt ist die Kalotte mit ihrem Schaft in ein Trägerrohr einsetzbar, das in Verlängerung des zentralen Kühlfluidzufuhrkanals der Kalotte eine zentrale Kühlfluidversorgungsbohrung besitzt.

Dabei kann von der zentralen Kühlfluidversorgungsbohrung des Trägerrohres beispielsweise eine allgemein radial nach außen führende Kühlfluidanschlussbohrung abzweigen, an die beispielsweise über ein entsprechendes Anschlussstück insbesondere eine Kühlfluidverbindungsleitung anschließbar ist.

Zum Nieten kann die Kalotte im aufgeheizten Zustand von einer beispielsweise einen Pneumatikzylinder umfassenden Vorschubeinheit über deren beispielsweise eine Kolbenstange umfassendes Stellelement gegen die Nietstelle gefahren werden. Sobald sich der Werkstoff unter der Nietkalotte erweicht und der Nietkopf sich ausgebildet hat, kann die zugeordnete Wärmequelle abgekoppelt oder ausgeschaltet werden, wonach die Zufuhr des Kühlfluids beginnt.

Gemäß einer weiteren vorteilhaften Ausführungsform ist das Trägerrohr mit einem eine zentrale Kühlfluidversorgungsbohrung aufweisenden Stellelement einer Vorschubeinheit verbunden, wobei das Kühlfluid der Kalotte in diesem Fall über die Kühlfluidversorgungsbohrung des Stellelements und die Kühlfluidversorgungsbohrung des Trägerrohres zuführbar ist.

Gemäß einer zweiten Alternative der Erfindung wird die obige Aufgabe dadurch gelöst, dass die Kalotte zumindest teilweise aus porösem, luftdurchlässigem Material, insbesondere Keramikmaterial, hergestellt ist und dass der Schaft der Kalotte mit einer vorzugsweise bis in den Kalottenkörper reichenden zentralen Kühlfluidzufuhrbohrung versehen ist.

Dabei ist zumindest der Kalottenkörper aus einem solchen porösen, luftdurchlässigen Material, insbesondere Keramikmaterial, hergestellt. Bevorzugt gilt dies jedoch auch für den Kalottenschaft.

Das über die zentrale Kühlfluidzufuhrbohrung zugeführte Kühlfluid strömt somit über eine Vielzahl von kleinen Kanälen durch den Kalottenkörper und vorzugsweise auch den Kalottenschaft nach außen, wodurch die Kalotte gleichmäßig und wirkungsvoll abgekühlt wird.

Auch in diesem Fall ist die Kalotte vorteilhafterweise wieder mit ihrem Schaft in ein Trägerrohr eingesetzt, das in Verlängerung der zentralen Kühlfluidzufuhrbohrung der Kalotte eine zentrale Kühlfluidversorgungsbohrung besitzt.

Von Vorteil ist hierbei auch wieder, wenn von der zentralen Kühlfluidversorgungsbohrung des Trägerrohres eine allgemein radial nach außen führende Kühlfluidanschlussbohrung abzweigt, an die insbesondere eine Kühlfluidverbindungsleitung anschließbar ist.

Gemäß einer alternativen zweckmäßigen Ausführungsform kann das Trägerrohr auch wieder mit einem eine zentrale Kühlfluidversorgungsbohrung aufweisenden Stellelement einer Vorschubeinheit verbunden sein, wobei das Kühlfluid der Kalotte in diesem Fall wieder über die Kühlfluidversorgungsbohrung des Stellelements und die Kühlversorgungsbohrung des Trägerrohres zuführbar ist.

Wie bereits erwähnt, kann es sich bei der Kalotte insbesondere um eine beheizbare Kalotte handeln. Die Vorrichtung kann also insbesondere so ausgeführt sein, dass das Verbindungselement primär über die mit diesem in Kontakt kommende beheizte Kalotte erwärmbar ist.

Keramikheizelemente als solche sind bereits bekannt. Es hat sich allerdings gezeigt, dass diese mittels einer herkömmlichen Luftkühlung von außen nur sehr langsam und unter hohem Luftverbrauch gekühlt werden können. Mit der erfindungsgemäßen Kühlung sind nun auch bei einem Einsatz solcher Keramikheizelemente problemlos kurze Kühlzeiten und ein relativ geringer Kühlfluidverbrauch sowie geringere Geräusche beim Kühlen erzielbar.

Die Erfindung betrifft auch eine Vorrichtung zum Verbinden von Gegenständen oder wenigstens ein durch Wärme plastifizierbares Verbindungselement, mit einer zum Verbindungselement hin und von diesem weg bewegbaren, einen Schaft aufweisenden beheizbaren Kalotte zur Ausbildung eines Nietkopfes am Verbindungselement und Mitteln zum direkten Beheizen der Kalotte, die dadurch gekennzeichnet ist, dass die Mittel zum direkten Beheizen der Kalotte wenigstens ein Keramikheizelement umfassen.

Bevorzugt ist eine solche erfindungsgemäße Vorrichtung mit Keramikheizelement nun kombiniert mit einer erfindungsgemäßen Kühlung, wobei diese im Anspruch 21 definierte Vorrichtung mit Keramikheizelement jedoch grundsätzlich auch ohne eine solche erfindungsgemäße Kühlung denkbar ist.

Das Keramikheizelement steht vorteilhafterweise in direktem Kontakt mit dem Kalottenkörper.

Dabei ist das Keramikheizelement bevorzugt fest mit der Kalotte verbunden.

Von Vorteil ist insbesondere, wenn das Keramikheizelement gegen den Kalottenkörper gepresst ist.

Eine bevorzugte praktische Ausgestaltung zeichnet sich dadurch aus, dass das Keramikheizelement eine ringförmige Gestalt besitzt und in direktem Kontakt mit dem Kalottenkörper auf den Kalottenschaft aufgebracht ist.

Dabei ist insbesondere von Vorteil, wenn das Keramikheizelement zwischen den Kalottenkörper und ein Trägerrohr eingespannt ist, wobei der Kalottenschaft ein Außengewinde aufweist und in ein Innengewinde des Trägerrohres eingeschraubt ist. Das Keramikheizelement wird hierbei also durch Einschrauben des Kalottenschaftes in das Innengewinde des Trägerrohres zwischen den Kalottenkörper und das Trägerrohr eingespannt.

Das Keramikheizelement kann zumindest teilweise aus zumindest einer der folgenden Verbindungen hergestellt sein: Aluminiumoxid (Al₂O₃), Zirkoniumdioxid (ZrO₂), Siliziumnitrid (Si₃N₄) und Aluminiumnitrid (A1N). Vorteilhafterweise sind dem Keramikheizelement auch Mittel zur Erfassung und/oder Überwachung der Temperatur zugeordnet, wobei diese insbesondere wenigstens einen Thermofühler umfassen können.

Die Erfindung wird im Folgenden anhand von Ausführungsbeispielen unter Bezugnahme auf die Zeichnung näher erläutert; in dieser zeigt:
- Fig. 1: eine schematische, teilweise geschnittene Darstellung einer beispielhaften Ausführungsform einer Kalotte mit gleichmäßig verteilten Kühlfluidkanälen,
- Fig. 2: eine schematische Draufsicht der Kalotte gemäß Fig. 1,
- Fig. 3: eine schematische, teilweise geschnittene Darstellung einer weiteren beispielhaften Ausführungsform einer Kalotte mit ungleichmäßig verteilten Kühlfluidkanälen,
- Fig. 4: eine schematische Draufsicht der Kalotte gemäß Fig. 3,
- Fig. 5: eine schematische, teilweise geschnittene Darstellung einer weiteren beispielhaften Ausführungsform einer Kalotte, deren Kühlfluidkanäle zumindest teilweise mit der Achse des Kalottenschafts einen Winkel ungleich 90° bilden,
- Fig. 6: eine schematische Draufsicht der Kalotte gemäß Fig. 5,
- Fig. 7: eine schematische, teilweise geschnittene Darstellung einer weiteren beispielhaften Ausführungsform einer Kalotte, deren Kühlfluidkanäle ausgehend vom zentra- len Kühlfluidzufuhrkanal jeweils zunächst eine relativ kleinere und anschließend eine relativ größere Innen- querschnittsfläche besitzen,
- Fig. 8: eine schematische Draufsicht der Kalotte gemäß der Fig. 7,
- Fig. 9: eine schematische, teilweise geschnittene Darstellung einer weiteren beispielhaften Ausführungsform einer Kalotte, bei der im Bereich des den Kühlfluidkanälen benachbarten Endes des zentralen Kühlzufuhrkanals eine in die Kühlfluidkanäle mündende Engstelle vorge- sehen ist,
- Fig. 10: eine schematische, teilweise geschnittene Darstellung einer weiteren beispielhaften Ausführungsform einer Kalotte, bei der in das den Kühlfluidkanälen benach- barte Ende des zentralen Kühlfluidzufuhrkanals ein austauschbarer, die Engstelle aufweisender Einsatz einbringbar ist,
- Fig. 11: eine schematische, teilweise geschnittene Darstellung einer weiteren beispielhaften Ausführungsform einer Kalotte, die zumindest teilweise aus porösem, luft- durchlässigem Material, insbesondere Keramikmateri- al, hergestellt ist,
- Fig. 12: eine schematische, teilweise geschnittene Darstellung einer beispielhaften Ausführungsform der Vorrichtung zum Verbinden von Gegenständen, bei der eine Kalotte mit ihrem Schaft in ein eine Kühlfluidanschlussboh- rung aufweisendes Trägerrohr einsetzbar ist,
- Fig. 13: eine schematische, teilweise geschnittene Darstellung einer beispielhaften Ausführungsform der Vorrichtung, bei der eine Kalotte mit ihrem Schaft in ein Trägerrohr einsetzbar ist, das mit einem eine zentrale Kühlfluid- versorgungsbohrung aufweisenden Stellelement einer Vorschubeinheit verbunden ist, und
- Fig. 14: eine schematische Teildarstellung einer beispielhaften Ausführungsform der Vorrichtung zum Verbinden von Gegenständen mit einem Keramikheizelement zum di- rekten Beheizen der Kalotte.

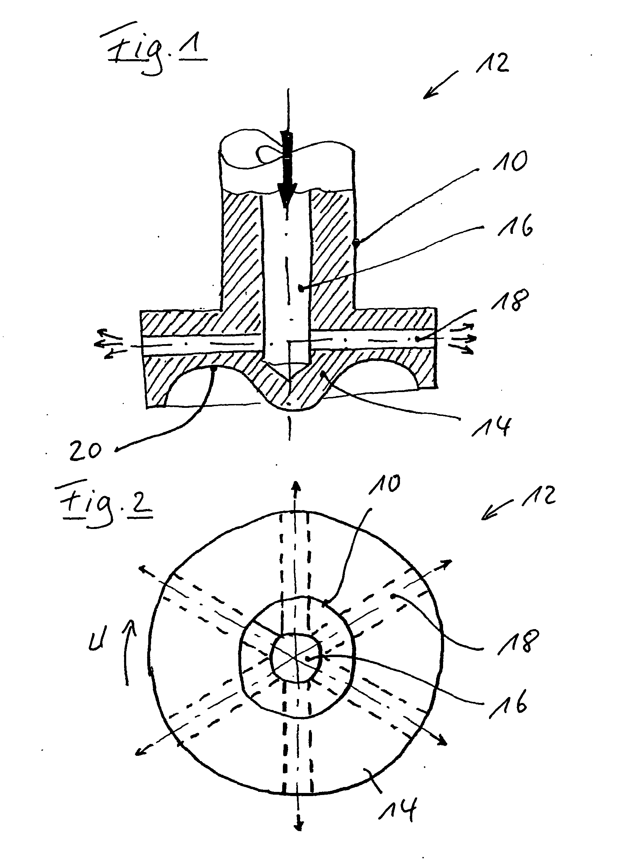

Eine Vorrichtung zum Verbinden von Gegenständen über wenigstens ein durch Wärme plastifizierbares Verbindungselement umfasst eine zum Verbindungselement hin und von diesem weg bewegbare, einen Schaft 10 aufweisende, insbesondere beheizbare Kalotte 12 zur Ausbildung eines Nietkopfes am Verbindungselement sowie Mittel zum Kühlen der Kalotte 12 mittels eines Kühlfluids, insbesondere Luft (vgl. die Fig. 1 bis 14). In den Fig. 1 bis 10 sind unterschiedliche Ausführungsformen der Kalotte 12 einer solchen Vorrichtung gezeigt, bei der jeweils der Schaft 10 der Kalotte 12 einen vorzugsweise bis in den Kalottenkörper 14 reichenden zentralen Kühlfluidzufuhrkanal 16 besitzt und innerhalb des Kalottenkörpers 14 mehrere ausgehend vom zentralen Kühlfluidzufuhrkanal 16 jeweils zumindest allgemein radial nach außen geführte Kühlfluidkanäle 18, 18', 18" vorgesehen sind.

Dabei können innerhalb des Kalottenkörpers 14 beispielsweise zwei bis zehn jeweils zumindest allgemein radial nach außen geführte Kühlfluidkanäle 18, 18', 18" vorgesehen sein. Grundsätzlich sind jedoch auch mehr als zehn Kühlfluidkanäle denkbar.

Fig. 1 zeigt in schematischer, teilweise geschnittener Darstellung eine beispielhafte Ausführungsform einer Kalotte 12, bei der mehrere radial nach außen geführten Kühlfluidkanäle 18 in Umfangsrichtung U (vgl. auch Fig. 2) gleichmäßig verteilt sind, d.h. die Winkelabstände zwischen den jeweils benachbarten Kühlfluidkanälen 18 gleich groß sind. Die Kühlfluidkanäle 18 verlaufen im vorliegenden Fall ausgehend vom zentralen Kühlfluidzufuhrkanal 16 sternförmig radial nach außen.

Das erwärmte Kühlfluid, insbesondere Luft, weicht über die Kühlfluidkanäle 18 nach außen.

Um eine möglichst gute Kühlwirkung zu erzielen, können die radialen Kühlfluidkanäle 18 möglichst nahe an der mit dem zu bildenden Nietkopf in Kontakt bringbaren Nietkontaktfläche 20 des Kalottenkörpers 14 angeordnet sein.

In Fig. 2 ist die Kalotte 12 gemäß Fig. 1 in schematischer Draufsicht gezeigt.

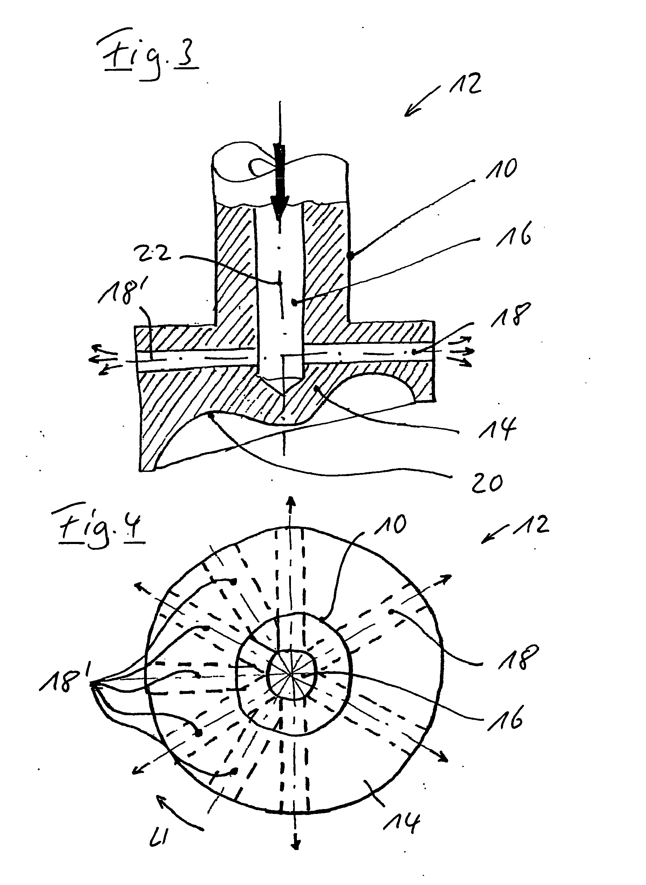

Fig. 3 zeigt in schematischer, teilweise geschnittener Darstellung eine weitere beispielhafte Ausführungsform einer Kalotte 12, bei der die radial nach außen geführten Kühlfluidkanäle 18, 18' in Umfangsrichtung U ungleichmäßig verteilt sind (vgl. insbesondere auch Fig. 4). Im vorliegenden Fall sind die Winkelabstände zwischen den jeweils benachbarten Kühlfluidkanälen 18, 18' also zumindest teilweise verschieden.

Dabei kann die Kühlfluidkanaldichte in einem definierten Bereich, insbesondere einem Bereich relativ größerer Massenanhäufung des Kalottenkörpers 14, höher als im restlichen Kalottenkörper sein. Im vorliegenden Fall sind dazu beispielsweise die Winkelabstände zwischen den jeweils benachbarten Kühlfluidkanälen 18' in dem Bereich höherer Kühlfluidkanaldichte kleiner als im restlichen Kalottenkörper.

Beim vorliegenden Ausführungsbeispiel besitzt der Kalottenkörper 14 bedingt durch die Nietkopfform eine zum Schaft 10 bzw. dessen Achse 22 eine nicht orthogonale Nietkontaktfläche 20, wodurch der Kalottenkörper 14 eine asymmetrische Massenverteilung erhält. Die Kühlkanäle 18, 18' sind nun so angeordnet, dass der Bereich der Massenanhäufung mit mehr Kühlfluid versorgt wird. Dazu ist im vorliegenden Fall in diesem Bereich eine höhere Anzahl von radialen Kühlfluidkanälen 18' vorgesehen, wodurch sich insgesamt eine untereinander nicht mehr symmetrische Anordnung der Kühlfluidkanäle 18, 18' ergibt.

In Fig. 4 ist die Kalotte 12 gemäß Fig. 3 in schematischer Draufsicht gezeigt.

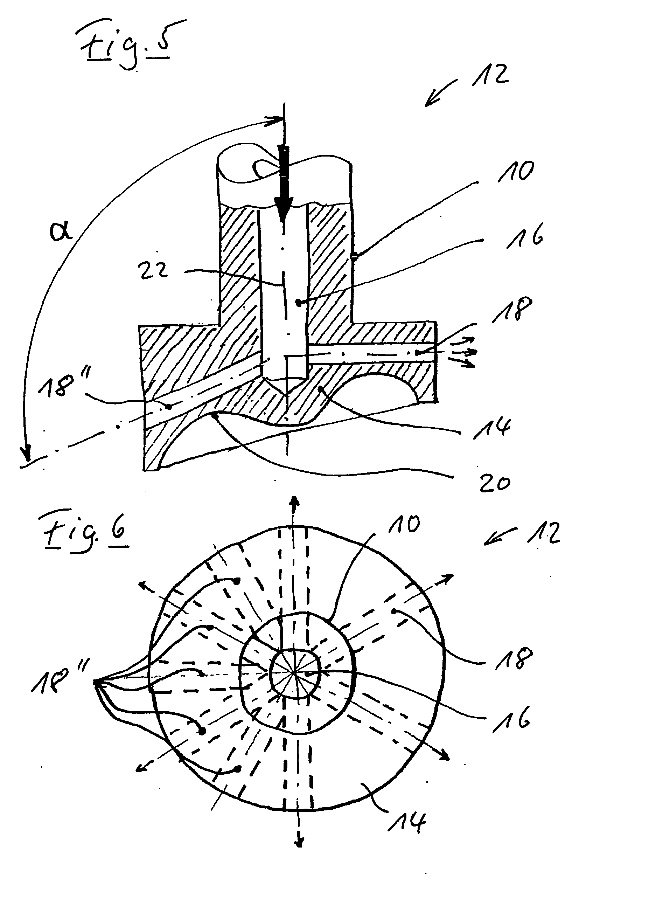

Fig. 5 zeigt in schematischer, teilweise geschnittener Darstellung eine weitere beispielhafte Ausführungsform einer Kalotte 12, bei der die Kühlfluidkanäle 18, 18" zumindest teilweise mit der Achse 22 des Kalottenschafts 10 jeweils einen Winkel α ungleich 90° bilden. Dabei sind die Kühlfluidkanäle 18, 18" bevorzugt wieder möglichst nahe an der mit dem zu bildenden Nietkopf in Kontakt bringbaren Nietkontaktfläche 20 des Kalottenkörpers 14 angeordnet.

Fig. 6 zeigt die Kalotte 12 gemäß Fig. 5 in schematischer Draufsicht.

Im vorliegenden Fall besitzt der Kalottenkörper 14 bedingt durch die Nietkopfform eine zum Schaft 10 nicht orthogonale Nietkontaktfläche 20, wodurch wieder zumindest ein Bereich entsteht, in dem sich exakt radial erstreckende Kühlfluidkanäle nicht mehr in unmittelbarer Nähe der Nietkontaktfläche 20 verlaufen würden. Demzufolge ist im vorliegenden Ausführungsbeispiel vorgesehen, die betreffenden Kühlfluidkanäle 18" so anzuordnen, dass sie mit der Achse 22 des Kalottenschaftes 10 jeweils einen Winkel ungleich 90° bilden, wobei dieser Winkel bevorzugt so gewählt wird, dass die jeweiligen Kühlfluidkanäle 18" wieder möglichst nahe an der Nietkontaktfläche 20 angeordnet sind.

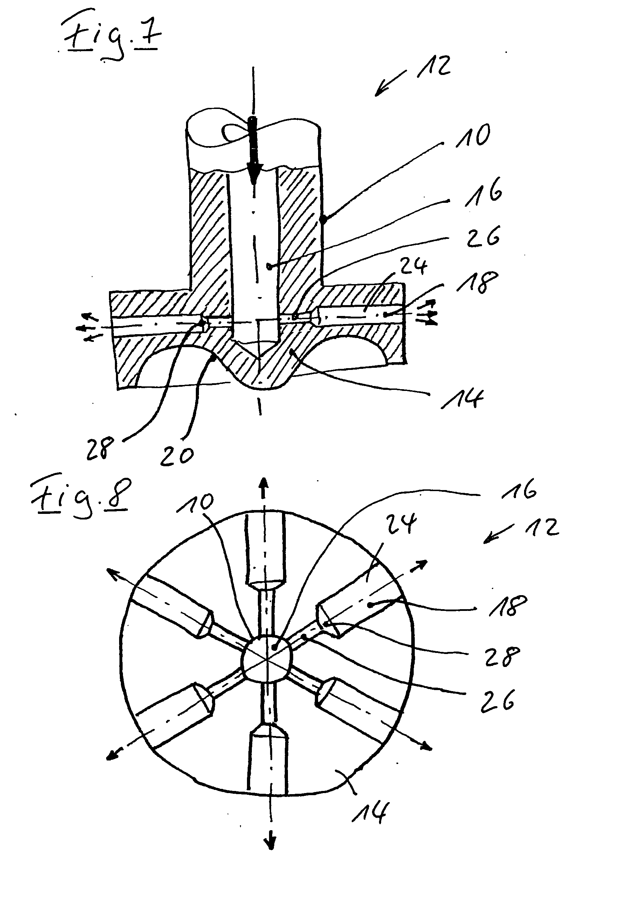

Fig. 7 zeigt in schematischer, teilweise geschnittener Darstellung eine weitere beispielhafte Ausführungsform einer Kalotte 12, bei der die Kühlfluidkanäle 18 ausgehend vom zentralen Kühlfluidzufuhrkanal 16 zunächst eine relativ kleinere Innenquerschnittsfläche und anschließend eine relativ größere Innenquerschnittsfläche besitzen.

Fig. 8 zeigt die Kalotte 12 gemäß Fig. 7 in schematischer Draufsicht.

Im vorliegenden Fall sind die radialen Kühlfluidkanäle 18 also so ausgeführt, dass sie jeweils einen radial äußeren Kanalabschnitt 24 größeren Querschnitts und einen radial inneren Kanalabschnitt 26 kleineren Querschnitts besitzen, wodurch die Kühlwirkung erhöht wird, nachdem sich im Bereich 28 des Übergangs zwischen den beiden Kanalabschnitten 24, 26 eine Querschnittserweiterung ergibt, die eine Expansion des Kühlfluids mit sich bringt, wodurch die Luft aufgrund des Joule-Thomson-Effekts zusätzlich abgekühlt wird.

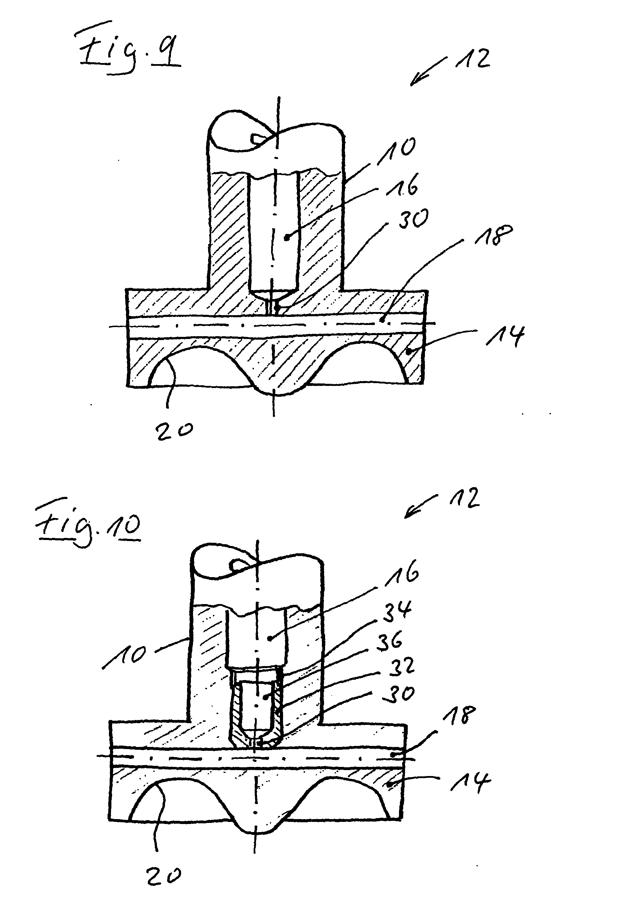

Fig. 9 zeigt in schematischer, teilweise geschnittener Darstellung eine weitere beispielhafte Ausführungsform der Kalotte 12, bei der im Bereich des den Kühlfluidkanälen 18 benachbarten Endes des zentralen Kühlfluidzufuhrkanals 16 eine in die Kühlfluidkanäle 18 mündende Engstelle 30 vorgesehen ist, um im Anschluss daran eine Entspannung des Kühlmediums zu bewirken. Auch in diesem Fall wird also wieder der Joule-Thomson-Effekt ausgenutzt, um die Kühlwirkung zu erhöhen.

Fig. 10 zeigt in schematischer, teilweise geschnittener Darstellung eine weitere beispielhafte Ausführungsform der Kalotte 12. Im vorliegenden Fall ist in das den Kühlfluidkanälen 18 benachbarte Ende des zentralen Kühlfluidzufuhrkanals 16 ein austauschbarer, die Engstelle 30 aufweisender Einsatz 32 einbringbar.

Dabei kann das den Kühlfluidkanälen 18 benachbarte Ende des zentralen Kühlfluidzufuhrkanals 16 mit einem Innengewinde 34 versehen sein, in das der mit einem Außengewinde versehene austauschbare Einsatz 32 einschraubbar ist.

Wie anhand der Fig. 10 zu erkennen ist, kann der Einsatz 32 insbesondere einen Abschnitt 36 mit einer relativ größeren Innenquerschnittsfläche besitzen, an den sich ein Endabschnitt mit der im Vergleich dazu eine relativ geringere Innenquerschnittsfläche besitzenden Engstelle 30 anschließt. Durch die Engstelle 30 wird wieder erreicht, dass sich das zugeführte Kühlfluid entspannt und abkühlt, wenn es in die hier insbesondere wieder radialen Kühlfluidkanäle 18 eintritt.

Der austauschbare Einsatz 32 ist vorteilhafterweise aus einer Mehrzahl von Einsätzen mit Engstellen unterschiedlicher Innenquerschnittsfläche auswählbar. Durch eine entsprechende Auswahl aus einer solchen Mehrzahl von Einsätzen mit Engstellen unterschiedlicher Innenquerschnittsfläche kann der Kühleffekt auf einfache Weise optimal an unterschiedliche Kalottengeometrien angepasst werden.

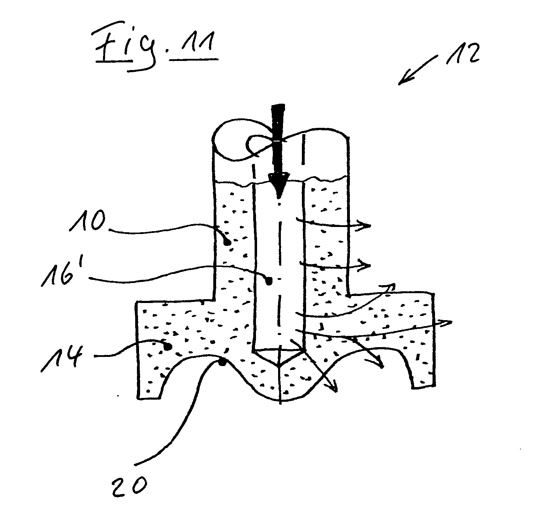

Fig. 11 zeigt in schematischer, teilweise geschnittener Darstellung eine weitere beispielhafte Ausführungsform einer Kalotte 12 einer entsprechenden Vorrichtung zum Verbinden von Gegenständen über wenigstens ein durch Wärme plastifizierbares Verbindungselement.

Im vorliegenden Fall ist die Kalotte 12 zumindest teilweise aus porösem, luftdurchlässigem Material, insbesondere Keramikmaterial, hergestellt. Der Schaft 10. der Kalotte 12 ist mit einer vorzugsweise wieder bis in den Kalottenkörper 14 reichenden zentralen Kühlfluidzufuhrbohrung 16' versehen. Dabei kann zumindest der Kalottenkörper 14, oder wie bei dem in der Fig. 11 dargestellten Ausführungsbeispiel zusätzlich auch der Kalottenschaft 10 aus einem entsprechenden porösen, luftdurchlässigen Material, insbesondere Keramikmaterial, hergestellt sein.

Das über die zentrale Kühlfluidzufuhrbohrung 16' zugeführte Kühlfluid, insbesondere Luft, strömt also durch eine Vielzahl kleiner Kanäle durch den Kalottenkörper 14 und den Kalottenschaft 10 nach außen, wodurch die Kalotte 12 gleichmäßig und wirkungsvoll abgekühlt wird.

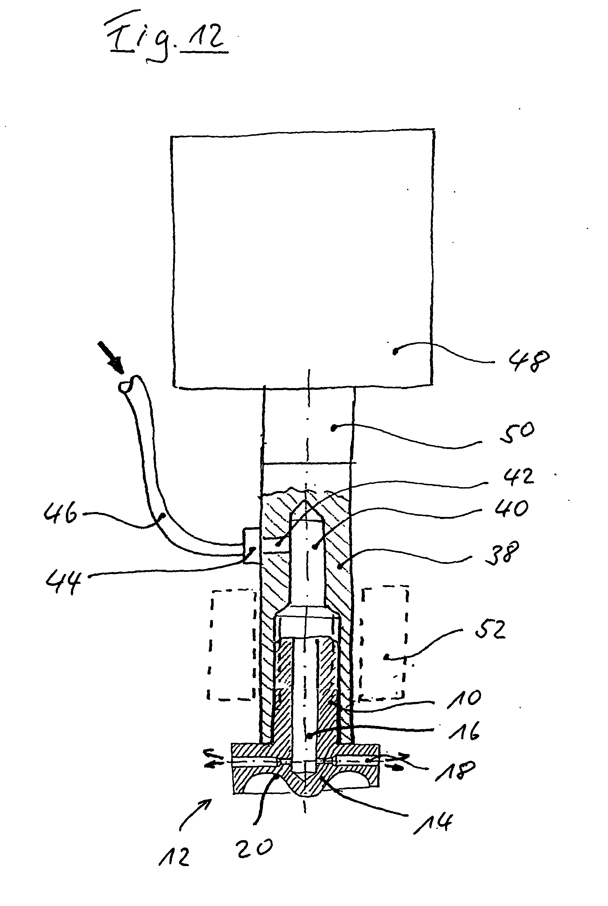

Fig. 12 zeigt in schematischer, teilweise geschnittener Darstellung eine beispielhafte Ausführungsform der Vorrichtung zum Verbinden von Gegenständen über wenigstens ein durch Wärme plastifizierbares Verbindungselement, bei der eine Kalotte 12 mit ihrem Schaft 10 in ein Trägeroder Distanzrohr 38 einsetzbar ist, das in Verlängerung des zentralen Kühlfluidzufuhrkanals 16 bzw. Kühlfluidzufuhrbohrung 16' (vgl. auch Fig. 11) der Kalotte 12 eine zentrale Kühlfluidversorgungsbohrung 40 besitzt.

Bei der Kalotte 12 kann es sich insbesondere um eine Kalotte der in den Fig. 1 bis 10 dargestellten Art oder auch um eine Kalotte der in Fig. 11 dargestellten Art handeln.

Bei der vorliegenden beispielhaften Ausführungsform zweigt von der zentralen Kühlfluidversorgungsbohrung 40 des Trägerrohrs 38 eine allgemein radial nach außen führende Kühlfluidanschlussbohrung 42 ab, an die beispielsweise über ein Anschlussstück 44 eine Kühlfluidverbindungsleitung 46 anschließbar ist.

Die Kalotte 12 kann also insbesondere in eine Heizkontakt-Einheit eingebaut sein. Hierbei kann die Kalotte 12 mit ihrem Schaft 10 in das Trägerrohr 38 eingeschraubt sein.

Zum Nieten wird die Kalotte 12 im aufgeheizten Zustand von einer Vorschubeinheit 48, die beispielsweise einen Pneumatikzylinder umfassen kann, über deren beispielsweise eine Kolbenstange umfassendes Stellelement 50 gegen die Nietstelle gefahren. Sobald sich der Werkstoff unter der Kalotte erweicht und sich der Nietkopf ausgebildet hat, kann beispielsweise eine zugeordnete Wärmequelle 52 abgekoppelt und die Einleitung von Kühlfluid eingeleitet werden.

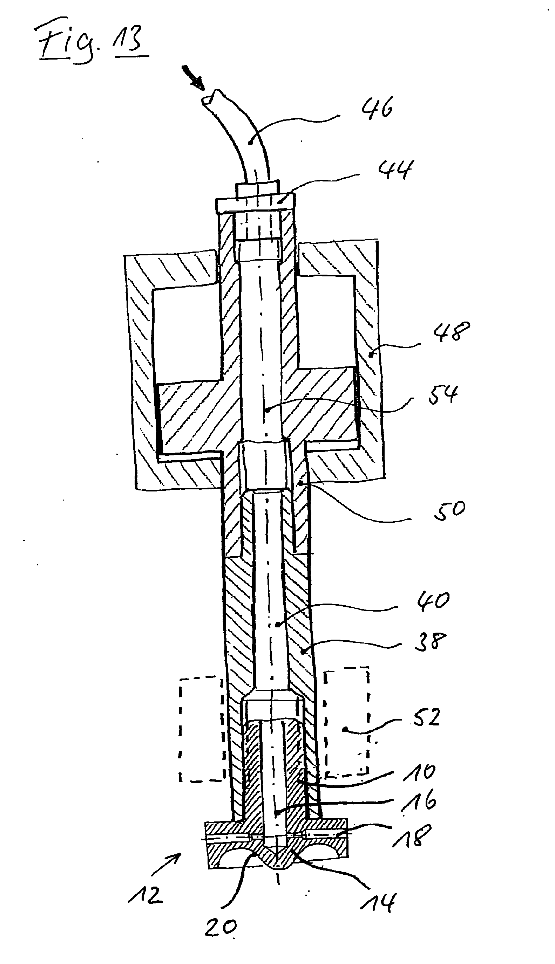

Fig. 13 zeigt in schematischer, teilweise geschnittener Darstellung eine beispielhafte Ausführungsform der Vorrichtung zum Verbinden von Gegenständen über wenigstens ein durch Wärme plastifizierbares Verbindungselement, bei der das Trägerrohr 38 mit einem eine zentrale Kühlfluidversorgungsbohrung 54 aufweisenden Stellelement 50 einer Vorschubeinheit 48 verbunden ist und das Kühlfluid der Kalotte 12 über die Kühlfluidversorgungsbohrung 54 des Stellelements 50 und die zentrale Kühlfluidversorgungsbohrung 40 des Trägerrohrs 38 zuführbar ist. Die Vorschubeinheit 48 kann beispielsweise wieder einen Pneumatikzylinder oder dergleichen umfassen.

Hierbei ist das Stellelement 50, das beispielsweise eine Kolbenstange umfassen kann, also mit einer zentralen Kühlfluidversorgungsbohrung 54 versehen, so dass das Kühlfluid, das beispielsweise über eine über ein Anschlussstück 44 mit dem Stellelement 50 verbundene Kühlfluidverbindungsleitung 46 zugeführt wird, durch die zentrale Kühlfluidversorgungsbohrung 54 des Stellelements 50, die zentrale Kühlfluidversorgungsbohrung 40 des Trägerrohres 38 und den zentralen Kühlfluidzufuhrkanal 16 bzw. Kühlfluidversorgungsbohrung 16' (vgl. auch Fig. 11) der Kalotte 12 in den Kalottenkörper 14 zugeführt wird.

Auch im vorliegenden Fall kann es sich bei der Kalotte 12 wieder um eine Kalotte der in den Fig. 1 bis 10 gezeigten Art oder um eine Kalotte der in der Fig. 11 gezeigten Art handeln.

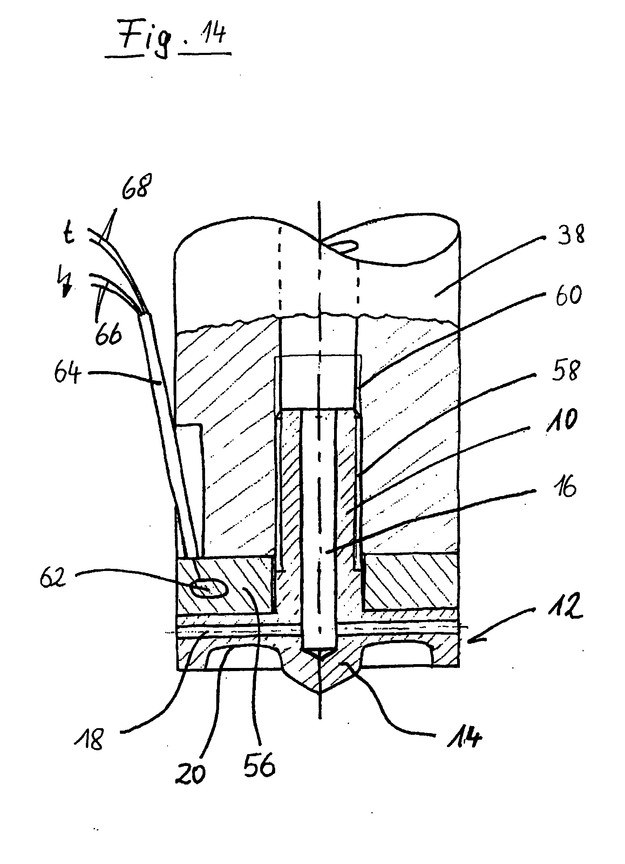

Fig. 14 zeigt in schematischer Teildarstellung eine beispielhafte Ausführungsform einer Vorrichtung zum Verbinden von Gegenständen über wenigstens ein durch Wärme plastifizierbares Verbindungselement, die wieder eine zum Verbindungselement hin und von diesem weg bewegbare, einen Schaft 10 aufweisende, insbesondere beheizbare Kalotte 12 zur Ausbildung eines Nietkopfes am Verbindungselement und Mittel zum Kühlen der Kalotte 12 mittels eines Kühlfluids, insbesondere Luft, umfasst.

Im vorliegenden Fall sind Mittel zum direkten Beheizen der beheizbaren Kalotte 12 vorgesehen, die ein Keramikheizelement 56 umfassen.

Dabei kann das Keramikheizelement 56 insbesondere in direktem Kontakt mit dem Kalottenkörper 14 stehen.

Das Keramikheizelement 56 ist zweckmäßigerweise fest mit der Kalotte 12 verbunden.

Das Keramikheizelement 56 kann insbesondere gegen den Kalottenkörper 14 gepresst sein.

Bevorzugt umfasst das Keramikheizelement 56 eine ringförmige Gestalt. Es kann in direktem Kontakt mit dem Kalottenkörper 14 auf den Kalottenschaft 10 aufgebracht sein.

Wie anhand der Fig. 14 zu erkennen ist, kann das Keramikheizelement 56 zwischen den Kalottenkörper 14 und ein Trägerrohr 38 eingespannt sein, wobei der Kalottenschaft 10 zweckmäßigerweise ein Außengewinde 58 aufweist und in ein Innengewinde 60 des Trägerrohres 38 eingeschraubt ist. Das Keramikheizelement 56 wird hierbei also durch Einschrauben des Kalottenschaftes 10 in das Innengewinde 60 des Trägerrohres 38 zwischen den Kalottenkörper 14 und das Trägerrohr 38 eingespannt..

Dem Keramikheizelement 56 können insbesondere auch Mittel zur Erfassung und/oder Überwachung der Temperatur zugeordnet sein, wobei diese insbesondere wenigstens einen Thermofühler umfassen können. In Fig. 14 sind ein solcher dem Keramikheizelement 56 zugeordneter Thermofühler 62 sowie ein elektrischer Anschluss 64 zu erkennen, der Leitungen 66 zur Stromversorgung des Thermofühlers 62 und Leitungen 68 zur Auswertung der Messsignale des Thermofühlers 62 beinhaltet.

### Bezugszeichenliste

- 10: Schaft
- 12: Kalotte
- 14: Kalottenkörper
- 16: zentraler Kühlfluidzufuhrkanal
- 16': zentrale Kühlfluidzufuhrbohrung
- 18: Kühlfluidkanal
- 18': Kühlfluidkanal
- 18": Kühlfluidkanal
- 20: Nietkontaktfläche
- 22: Schaftachse
- 24: radial äußerer Kanalabschnitt
- 26: radial innerer Kanalabschnitt
- 28: Übergangsbereich
- 30: Engstelle
- 32: Einsatz
- 34: Innengewinde
- 36: Abschnitt
- 38: Trägerrohr
- 40: zentrale Kühlfluidversorgungsbohrung
- 42: Kühlfluidanschlussbohrung
- 44: Anschlussstück
- 46: Kühlfluidverbindungsleitung
- 48: Vorschubeinheit
- 50: Stellelement
- 52: Wärmequelle
- 54: Kühlfluidversorgungsbohrung
- 56: Keramikheizelement
- 58: Außengewinde
- 60: Innengewinde
- 62: Thermofühler
- 64: elektrischer Anschluss
- 66: Leitungen zur Stromversorgung des Thermofühlers 62
- 68: Leitungen zur Auswertung der Messsignale des Ther- mofühlers 62

- U: Umfangsrichtung
- α: Kühlfluidkanal 18, 18' und 18"

## Patentansprüche

1. Vorrichtung zum Verbinden von Gegenständen über wenigstens ein durch Wärme plastifizierbares Verbindungselement, mit einer zum Verbindungselement hin und von diesem wegbewegbaren, einen Schaft (10) aufweisenden, insbesondere beheizbaren Kalotte (12) zur Ausbildung eines Nietkopfes am Verbindungselement und Mitteln zum Kühlen der Kalotte (12) mittels eines Kühlfluids, insbesondere Luft,
**dadurch gekennzeichnet,**
**dass** der Schaft (10) der Kalotte (12) einen vorzugsweise bis in den Kalottenkörper (14) reichenden zentralen Kühlfluidzufuhrkanal (16) besitzt und innerhalb des Kalottenkörpers (14) mehrere ausgehend vom zentralen Kühlfluidzufuhrkanal (16) jeweils zumindest allgemein radial nach außen geführte Kühlfluidkanäle (18, 18', 18") vorgesehen sind.

2. Vorrichtung nach Anspruch 1,
**dadurch gekennzeichnet,**
**dass** innerhalb des Kalottenkörpers zwei bis zehn jeweils zumindest allgemein radial nach außen geführte Kühlfluidkanäle (18, 18', 18") vorgesehen sind, und/oder dass die zumindest allgemein radial nach außen geführten Kühlfluidkanäle (18) in Umfangsrichtung (U) gleichmäßig verteilt sind, d.h. die Winkelabstände (18) zwischen den jeweils benachbarten Kühlfluidkanälen gleich groß sind.

3. Vorrichtung nach Anspruch 1 oder 2,
**dadurch gekennzeichnet,**
**dass** die zumindest allgemein radial nach außen geführten Kühlfluidkanäle (18, 18') in Umfangsrichtung (U) ungleichmäßig verteilt sind, d.h. die Winkelabstände zwischen den jeweils benachbarten Kühlfluidkanälen (18, 18') zumindest teilweise verschieden sind, wobei vorzugsweise die Kühlfluidkanaldichte in einem definierten Bereich, insbesondere einem Bereich relativ größerer Massenanhäufung des Kalottenkörpers (14) höher als im restlichen Kalottenkörper ist.

4. Vorrichtung nach Anspruch 3,
**dadurch gekennzeichnet,**
**dass** die Winkelabstände zwischen den jeweils benachbarten Kühlfluidkanälen (18') in dem Bereich höherer Kühlfluidkanaldichte kleiner sind als im restlichen Kalottenkörper.

5. Vorrichtung nach einem der vorhergehenden Ansprüche,
**dadurch gekennzeichnet,**
**dass** die Kühlfluidkanäle (18, 18") zumindest teilweise mit der Achse (22) des Kalottenschaftes (10) jeweils einen Winkel (α) ungleich 90° bilden, wobei die die Kühlfluidkanäle (18, 18") bevorzugt möglichst nahe an der mit dem zu bildenden Nietkopf in Kontakt bringbaren Nietkontaktfläche (20) des Kalottenkörpers (14) angeordnet sind, und/oder dass die Kühlfluidkanäle (18) zumindest teilweise ausgehend vom zentralen Kühlfluidzufuhrkanal (16) zunächst eine relativ kleinere Innenquerschnittsfläche und anschließend eine relativ größere Innenquerschnittsfläche besitzen, und/oder dass im Bereich des den Kühlfluidkanälen (18) benachbarten Endes des zentralen Kühlfluidzufuhrkanals (16) eine in die Kühlfluidkanäle (18) mündende Engstelle (30) vorgesehen ist, um im Anschluss daran eine Entspannung des Kühlmediums zu bewirken.

6. Vorrichtung nach Anspruch 5,
**dadurch gekennzeichnet,**
**dass** in das den Kühlfluidkanälen (18) benachbarte Ende des zentralen Kühlfluidzufuhrkanals (16) ein austauschbarer, die Engstelle (30) aufweisender Einsatz (32) einbringbar ist, wobei vorzugsweise das den Kühlfluidkanälen (18) benachbarte Ende des zentralen Kühlfluidzufuhrkanals (16) mit einem Innengewinde (34) versehen ist, in das der mit einem Außengewinde versehene austauschbare Einsatz (32) einschraubbar ist, und/oder vorzugsweise der Einsatz (32) einen Abschnitt (36) mit einer relativ größeren Innenquerschnittsfläche besitzt, an den sich ein Endabschnitt mit der im Vergleich dazu eine relativ geringere Innenquerschnittsfläche besitzenden Engstelle (30) anschließt.

7. Vorrichtung nach Anspruch 6,
**dadurch gekennzeichnet,**
**dass** der austauschbare Einsatz (32) aus einer Mehrzahl von Einsätzen mit Engstellen (30) unterschiedlicher Innenquerschnittsfläche auswählbar ist.

8. Vorrichtung nach einem der vorhergehenden Ansprüche,
**dadurch gekennzeichnet,**
**dass** die Kalotte (12) mit ihrem Schaft (10) in ein Trägerrohr (38) einsetzbar ist, das in Verlängerung des zentralen Kühlfluidzufuhrkanals (16) der Kalotte eine zentrale Kühlfluidversorgungsbohrung (40) besitzt, wobei vorzugsweise von der zentralen Kühlfluidversorgungsbohrung (40) des Trägerrohres (38) eine allgemein radial nach außen führende Kühlfluidanschlußbohrung (42) abzweigt, an die insbesondere eine Kühlfluidverbindungsleitung (46) anschließbar ist, oder das Trägerrohr (38) mit einem eine zentrale Kühlfluidversorgungsbohrung (54) aufweisenden Stellelement (50) einer Vorschubeinheit (48) verbunden ist und dass das Kühlfluid der Kalotte (12) über die Kühlfluidversorgungsbohrung (54) des Stellelements (50) und die Kühlfluidversorgungsbohrung (40) des Trägerrohres (38) zuführbar ist.

9. Vorrichtung zum Verbinden von Gegenständen über wenigstens ein durch Wärme plastifizierbares Verbindungselement, mit einer zum Verbindungselement hin und von diesem wegbewegbaren, einen Schaft (10) aufweisenden, insbesondere beheizbaren Kalotte (12) zur Ausbildung eines Nietkopfes am Verbindungselement und Mitteln zum Kühlen der Kalotte (12) mittels eines Kühlfluids, insbesondere Luft,
**dadurch gekennzeichnet,**
**dass** die Kalotte (12) zumindest teilweise aus porösem, luftdurchlässigem Material, insbesondere Keramikmaterial, hergestellt ist und dass der Schaft (10) der Kalotte (12) mit einer vorzugsweise bis in den Kalottenkörper (14) reichenden zentralen Kühlfluidzufuhrbohrung (16') versehen ist.

10. Vorrichtung nach Anspruch 9,
**dadurch gekennzeichnet,**
**dass** die Kalotte (12) mit ihrem Schaft (10) in ein Trägerrohr (38) einsetzbar ist, das in Verlängerung der zentralen Kühlfluidzufuhrbohrung (16') der Kalotte (12) eine zentrale Kühlfluidversorgungsbohrung (40) besitzt, wobei vorzugsweise von der zentralen Kühlfluidversorgungsbohrung (40) des Trägerrohres (38) eine allgemein radial nach außen führende Kühlfluidanschlußbohrung (42) abzweigt, an die insbesondere eine Kühlfluidverbindungsleitung (46) anschließbar ist, oder das Trägerrohr (38) mit einem eine zentrale Kühlfluidversorgungsbohrung (54) aufweisenden Stellelement (50) einer Vorschubeinheit (48) verbunden und das Kühlfluid der Kalotte (12) über die Kühlfluidversorgungsbohrung (54) des Stellelements (50) und die Kühlfluidversorgungsbohrung (40) des Trägerrohres (38) zuführbar ist.

11. Vorrichtung zum Verbinden von Gegenständen über wenigstens ein durch Wärme plastifizierbares Verbindungselement, mit einer zum Verbindungselement hin und von diesem wegbewegbaren, einen Schaft (10) aufweisenden beheizbaren Kalotte (12) zur Ausbildung eines Nietkopfes am Verbindungselement und Mitteln zum direkten Beheizen der Kalotte (12), insbesondere nach einem der vorhergehenden Ansprüche 1 bis 20,
**dadurch gekennzeichnet,**
**dass** die Mittel zum direkten Beheizen der Kalotte (12) wenigstens ein Keramikheizelement (56) umfassen.

12. Vorrichtung nach Anspruch 11,
**dadurch gekennzeichnet,**
**dass** das Keramikheizelement (56) in direktem Kontakt mit dem Kalottenkörper (14) steht, wobei vorzugsweise das Keramikheizelement (56) fest mit der Kalotte (12) verbunden ist.

13. Vorrichtung nach einem der vorhergehenden Ansprüche,
**dadurch gekennzeichnet,**
**dass** das Keramikheizelement (56) gegen den Kalottenkörper (14) gepresst ist und/oder dass das Keramikheizelement (56) eine ringförmige Gestalt besitzt und in direktem Kontakt mit dem Kalottenkörper (14) auf den Kalottenschaft (10) aufgebracht ist.

14. Vorrichtung nach Anspruch 13,
**dadurch gekennzeichnet,**
**dass** das Keramikheizelement (56) zwischen den Kalottenkörper (14) und ein Trägerrohr (38) eingespannt ist, wobei der Kalottenschaft (10) ein Außengewinde (58) aufweist und in ein Innengewinde (60) des Trägerrohres (38) eingeschraubt ist.

15. Vorrichtung nach einem der vorhergehenden Ansprüche,
**dadurch gekennzeichnet,**
**dass** dem Keramikheizelement (56) Mittel zur Temperaturerfassung und/oder -überwachung zugeordnet sind, wobei diese vorzugsweise wenigstens einen Thermofühler (62) umfassen.
